Europäisches Patentamt

European Patent Office

Office européen des brevets

(19)

(11) Veröffentlichungsnummer: **0 461 555 B1**

(12) # EUROPÄISCHE PATENTSCHRIFT

(45) Veröffentlichungstag der Patentschrift: **14.12.94**

(51) Int. Cl.5: **C08G 14/06**

(21) Anmeldenummer: **91109354.0**

(22) Anmeldetag: **07.06.91**

(54) **Verfahren zur Herstellung von Imprägnierharzen auf Phenol-Formaldehyd-Basis.**

(30) Priorität: **08.06.90 DE 4018469**

(43) Veröffentlichungstag der Anmeldung:
**18.12.91 Patentblatt 91/51**

(45) Bekanntmachung des Hinweises auf die
Patenterteilung:
**14.12.94 Patentblatt 94/50**

(84) Benannte Vertragsstaaten:
**AT CH DE ES FR GB IT LI**

(56) Entgegenhaltungen:
**EP-A- 0 273 794**
**EP-A- 0 277 926**
**US-A- 4 546 119**

(73) Patentinhaber: **SÜD-WEST-CHEMIE GMBH**
**Pfaffenweg 18**
**D-89231 Neu-Ulm (DE)**

(72) Erfinder: **Kopp, Otto, Dr. rer. nat.**
**Weserstrasse 2**
**W-7910 Neu-Ulm (DE)**
Erfinder: **Birnbaum, Charlotte, Dipl.-Ing. (FH)**
**Zeisigweg 5**
**W-7910 Neu-Ulm (DE)**
Erfinder: **Gabriel, Hubert**
**Ulrich-Tengler-Strasse 1**
**W-8883 Höchstädt (DE)**

(74) Vertreter: **Huber, Bernhard, Dipl.-Chem. et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08**
**20**
**D-81635 München (DE)**

**Beschreibung**

Die Erfindung betrifft ein Verfahren zur Herstellung von Imprägnierharzen auf Phenol-Formaldehyd-Basis und deren Verwendung.

Heterogene Systeme mit festen Anteilen können durch Filtrationsverfahren in die Einzelkomponenten aufgetrennt werden. Bei vielen technischen Prozessen sind diese Trennungen eine Vorbedingung für die Durchführbarkeit und den störungsfreien Ablauf. Zum Beispiel ist die Funktionsfähigkeit von Verbrennungsmotoren zu einem hohen Grad von der Reinheit des zugeführten Kraftstoffes und der Verbrennungsluft, sowie der Schmierstoffe abhängig. Die festen Anteile wie Verunreinigungen, Staubpartikel oder Metallabrieb, werden dabei zurückgehalten, wenn die Teilchen größer sind als die Poren des Filtermediums. Die Wirksamkeit des Filters ist nun sowohl von der Durchlässigkeit als auch vom Rückhaltevermögen für die zu filtrierenden Partikel abhängig. Grobe Partikel werden auf der Filteroberfläche abgelagert und feine Partikel, deren Größe unter der durchschnittlichen Porenweite des Filterpapiers liegt, werden in den Filter eingespült und mechanisch oder durch zwischen den Grenzflächen Schmutzpartikel/Filterpapier wirkende molekulare Kräfte zurückgehalten. Verringert die Gesamtmenge der eingespülten Schmutzpartikel das Porenvolumen, so sinkt die Leistung des Filters ab. Bei gleicher Filterleistung steigt der notwendige Druck und damit die mechanische Belastung des Fasergefüges. Basismaterialien für die Filtermedien sind zum größten Teil Zellstoffpapiere. Die mechanisch-technologischen Eigenschaften der Papiere sind jedoch im Normalfall für den Anwendungszweck nicht ausreichend. Um die Festigkeitseigenschaften des Papieres zu erhöhen, ist daher eine Ausrüstung mit Kunstharzen üblich. Dazu werden thermoplastische oder duroplastische Kunstharze in alkoholischer Lösung verwendet. Mit thermoplastischen Kunststoffen ausgerüstete Papiere brauchen nach der Verarbeitung zu Filtermedien im Gegensatz zu den mit duroplastischen Harzen behandelten Papieren nicht gehärtet zu werden, sie sind jedoch für viele Bereiche nicht einsetzbar, da sie nicht lösungsmittelbeständig sind und für höhere Temperaturbereiche nicht geeignet sind. Mit duroplastischen Kunststoffen ausgerüstete Papiere sind demgegenüber universeller einsetzbar, müssen allerdings ausgehärtet werden.

Als duroplastische Kunststoffe werden überwiegend Kondensationsprodukte auf Basis von Phenol und Formaldehyd vom Novolak- und Resoltyp als methanolische Lösungen eingesetzt. Aufgrund ihrer Eigenschaften sind Resolharze besser als Novolakharze zur Imprägnierung geeignet. Resolharze verleihen dem Papier höhere Festigkeitswerte, steigern den Berstdruck, halten die Werte auch bei niedriger und hoher Feuchtigkeit und bei erhöhter Temperatur sowie bei Einwirkung von Wasser. Demgegenüber sind die mit Novolakharzen erzielten Festigkeitswerte für einen Teil des Anwendungsbereiches technischer Filter nicht ausreichend.

Novolakharzlösungen bieten jedoch aufgrund der geringen Mengen von freien Anteilen verfahrenstechnische Vorteile. Resolharzlösungen weisen im Gegensatz zu Novolakharzlösungen deutlich höhere Anteile von Monomeren auf. Teilweise werden auch physikalische Gemische beider Harztypen verwendet.

Technisch üblich ist auch der Zusatz von thermoplastischen Kunststoffen zu PF-Imprägnierharzen, um die mechanisch-physikalischen Eigenschaften der Filter (Berstdruck, Naßfestigkeit usw.) zu verbessern. Die jeweils verwendete Harzlösung wird nach dem Tauchverfahren oder mit Rasterwalzen in notwendiger Menge auf das Papier aufgebracht und das mit der Harzlösung gesättigte Papier wird anschließend getrocknet. Im Trockner wird das Lösungsmittel ausgetrieben, wobei gleichzeitig ein großer Anteil der monomeren freien Anteile des Harzes, insbesondere freies Phenol und freier Formaldehyd, mit entfernt werden. Aus der Abluft des Trockners kann das Lösungsmittel dann zurückgewonnen und in den Kreislauf zurückgeschleust werden. Bei dieser Aufarbeitung fallen als Abfallprodukte hochkonzentrierte Phenol-Formaldehyd-Gemische an, die als Sondermüll entsorgt werden müssen, was nachteilig ist, da einerseits wertvolles Einsatzmaterial verlorengeht und andererseits die Entsorgung der toxischen Gemische problematisch ist.

Die mit der Harzlösung getränkten und getrockneten Papiere werden dann durch Falzen, Rillieren und Formatieren zu Filtersätzen verarbeitet. Anschließend wird das Harz bei höheren Temperaturen ausgehärtet, wodurch der Filtersatz in seiner Form fixiert wird. Während dieser Verarbeitungsgänge können erhebliche Mengen monomerer Rohstoffe freigesetzt werden, was zu Problemen führt. Da sich Novolakharzlösungen mit vergleichsweise geringen freien Anteilen an Phenol (< 0,5 %) und Formaldehyd (< 0,1 %) herstellen lassen, verhalten sie sich in Hinsicht auf die Emission von Monomeren während der Rillier-, Falz- und Formatiervorgänge am günstigsten.

Eine Reduzierung der freien Anteile an Phenol auf unter 2,5 % und an Formaldehyd auf unter 1,5 % ist bei der Herstellung von Resolharzen nach den bisher bekannten Verfahren nicht möglich, wenn andere Harzeigenschaften wie Viskosität, Löslichkeit und Härtungseigenschaften in vorgeschriebenen Grenzbereichen gehalten werden müssen. Wenn nun diese Resolharze mit hohen freien Anteilen zur Ausrüstung von Papieren verwendet werden, so weisen die Imprägnate einen entsprechend höheren Anteil an Monomeren auf, was wiederum zu Emissionen führt, die oberhalb der Toleranzgrenzen liegen.

Resole werden hergestellt durch Reaktion von Phenol und Formaldehyd in Anwesenheit von katalytisch wirkenden Basen, sie härten ohne Zusatz von Härtungsmitteln.

Die Eigenschaften der Resolharze hängen ab von den angewandten molaren Verhältnissen an Phenol und Formaldehyd, von Art und Menge der angewandten katalytisch wirkenden Substanzen, Konzentrationsverhältnissen, Reaktionsabläufen. Abhängig von diesen Parametern stellen sich Stoffgleichgewichte ein. Durch eine Erhöhung des molaren Verhältnisses von Phenol zu Formaldehyd kann der Restgehalt nicht umgesetzter Phenole reduziert werden, gleichzeitig weisen die Harze jedoch einen erhöhten Anteil an freiem Formaldehyd auf. Es findet dadurch also nur eine Verschiebung der Probleme statt. Auch eine Erhöhung der Kontaktmittelmenge konnte das Problem nicht lösen, da auch hier die Anteile von freien Monomeren über den geforderten Grenzwerten liegen. Als Kontaktmittel für Resolkondensationen finden Alkali- und Erdalkalihydroxide, Ammoniak und die verschiedensten Amine Verwendung.

Für die Anwendbarkeit eines Kontaktmittels ist im Falle der Resolharze für die Imprägnierung von Filterpapieren eine Einschränkung gegeben. Das verwendete Kontaktmittel, sowie dessen Menge, bestimmen die Farbe des imprägnierten und ausgehärteten Filterpapieres. Gefordert ist ein helles Gelb mit bräunlicher Farbtönung. Diese Forderung nach einem, in einem engen Definitionsbereich liegenden Farbton ist eine spezifische Anforderung der Endverbraucher von Filtern.

Weiterhin ist es technisch üblich, den Imprägnierlösungen Farbstoffe zuzusetzen. Durch Einfärbung mit nicht temperaturbeständigen Farbstoffen kann der Aushärtungsgrad der Filter festgelegt und kontrolliert werden. Zur Erzielung optimaler Aushärtungsgrade wird die Temperaturbehandlung bis zum vollkommenen Verschwinden der Farbe durchgeführt.

Diese Verfahrensweise stellt für die Verarbeiter von Filterpapieren eine wesentliche Arbeitserleichterung dar. Nach dem thermischen Abbau (Umschlagen des Farbstoffes) soll das gehärtete Filterpapier eine gewünschte Farbe (helles Gelb, bräunlicher Farbstich) aufweisen. Außerdem wird mit dem Zusatz von thermostabilen Farbstoffen eine Farbmarkierung von Filtern nach Einsatzgebieten und nach Wünschen der Endverbraucher vorgenommen.

Durch die Härtung darf sich der durch den thermostabilen Farbstoff gegebene Farbton nicht wesentlich durch die Eigenfarbe des Harzes verändern.

Werden nun als Kontaktmittel Basen wie Alkali- oder Erdalkali-Verbindungen eingesetzt, so weisen nach der Härtung die imprägnierten Filterpapiere eine bräunlich bis rotbraune Färbung auf, was unerwünscht ist. Weiterhin ist bei Verwendung von Alkali- oder Erdalkalihydroxiden eine Verringerung der mechanischen Festigkeit festzustellen. Mit Ammoniak oder Aminen katalysierte Harze bringen den gewünschten Farbton, ihre katalytische Wirkung ist jedoch gering, so daß sie in großer Menge eingesetzt werden müssen.

Zur Lösung dieser Probleme wurde in DE-A 29 09 830 vorgeschlagen, die Kondensation von Phenol und Formaldehyd in Anwesenheit von Diolen durchzuführen. Die so erhaltenen Kondensationsprodukte weisen jedoch noch hohe Anteile an freiem Formaldehyd und freiem Phenol auf. Darüberhinaus sind die damit imprägnierten Filterpapiere in ihren technologischen Eigenschaften unbefriedigend. Weiterhin wird in US-PS 4,157,937 ein Verfahren beschrieben, bei dem als Kontaktmittel 50%ige Natronlauge verwendet wird und nach Kondensation und Entwässerung der Lösung Methanol und eine Lösung von Polyvinylacetat zugesetzt wird. Bei diesen Verfahren entstehen Harze mit hohen Formaldehydgehalten.

Aufgabe der vorliegenden Erfindung war es daher, ein Verfahren zur Verfügung zu stellen, mit dem Imprägnierharze vom Resoltyp hergestellt werden können, die gute Verträglichkeit mit thermoplastischen Kunststoffen aufweisen, geringe Emissionen toxischer Stoffe zeigen, nach der thermischen Behandlung eine gewünschte Farbe aufweisen und ohne Verwendung toxischer Katalysatoren herstellbar sind.

Diese Aufgabe wird gelöst durch ein Verfahren zur Herstellung von Imprägnierharzen auf Phenol-Formaldehyd-Basis, das dadurch gekennzeichnet ist, daß man

(a) Phenol und einen Aminoplast-Bildner bei saurem pH-Wert erhitzt,

(b) alkalisch reagierendes Kontaktmittel und Formaldehyd in solcher Menge zugibt, daß das Verhältnis von Phenol zu Formaldehyd im Bereich von 1:1,5 bis 1:4 liegt,

(c) die Mischung so lange bis zum Sieden erhitzt, bis nicht mehr als 2 % freies Phenol nachweisbar ist,

(d) die erhaltene Mischung entwässert,

(e) das erhaltene Harz in Methanol löst,

(f) einen Aminoplast-Bildner zusetzt und so lange reagieren läßt, bis nicht mehr als 2 % freier Formaldehyd nachweisbar ist und

(g) die Reaktion durch schnelles Abkühlen auf Raumtemperatur beendet.

Überraschenderweise liefert das erfindungsgemäße Verfahren Imprägnierharze, die den vielfältigen Anforderungen entsprechen. Es können auf diese Weise Harze hergestellt werden, die sehr geringe Gehalte

3

an freiem Phenol und freiem Formaldehyd aufweisen, gut lagerfähig sind und für vielfältige technische Zwecke geeignet sind.

Zur erfindungsgemäßen Herstellung der Imprägnierharze wird zuerst Phenol mit einem Aminoplastbildner im sauren pH-Bereich erhitzt. Es können ein oder mehrere Aminoplastbildner verwendet werden. Unter Aminoplastbildner werden nach allgemeinem technischen Sprachgebrauch Verbindungen verstanden, die mit Formaldehyd nach dem Reaktionsschema der α-Aminoalkylierung zur Bildung harzartiger Kondensationsprodukte befähigt sind. Als Beispiele sind zu nennen Harnstoff, Dicyandiamid, Melamin, Guanamin, Sulfonamide und deren Derivate. Es können auch Mischungen der einzelnen Komponenten bzw. der Derivate verwendet werden. Bevorzugt wird als Aminoplastbildner Harnstoff und/oder Dicyandiamid verwendet. Das Verhältnis von Phenol zu Aminoplastbildner ist unkritisch, der Aminoplastbildner wird in einem geringeren Anteil als Phenol eingesetzt. Bevorzugt liegt das molare Verhältnis von Phenol zu Aminoplastbildner im Bereich von 1:0,05 bis 1:0,3.

Der pH-Wert wird durch Zugabe einer Säure eingestellt. Dazu wird eine Säure, die die Reaktion nicht nachteilig beeinflußt, eingesetzt. Geeignet sind organische Säuren, insbesondere bifunktionelle Säuren. Bevorzugt wird als Säure Amidosulfonsäure, Glyoxylsäure, Maleinsäureanhydrid oder Oxalsäure verwendet. Bevorzugt liegt in der ersten Stufe des erfindungsgemäßen Verfahrens der pH-Wert im Bereich von 1,0 bis 1,5.

Die Reaktionsmischung wird erhitzt, wobei Phenol und Harnstoff miteinander reagieren. Bevorzugt wird die Mischung auf eine Temperatur im Bereich von 120 bis 130°C erhitzt und über eine Zeitdauer im Bereich von 30 bis 90 Minuten auf dieser Temperatur gehalten.

Nach diesem ersten Erhitzungsschritt wird der Mischung ein alkalisch reagierendes Kontaktmittel und Formaldehyd zugegeben. Bevorzugt wird vor Zugabe des alkalischen Mittels und des Formaldehyds die Temperatur der Mischung etwas abgesenkt, besonders bevorzugt auf eine Temperatur im Bereich von 70 bis 90°C. Als alkalisch reagierendes Kontaktmittel können alle auf diesem Gebiet verwendeten Basen eingesetzt werden, wie Alkali-, Erdalkalihydroxide, deren katalytisch wirkende Salze mit schwachen Säuren sowie Ammoniak und Amine. Bevorzugt werden erfindungsgemäß Alkali- und/oder Erdalkalihydroxide verwendet. Besonders bevorzugt ist die Verwendung von Lithiumhydroxid, insbesondere wenn die Imprägnierlösung zum Imprägnieren von Filterpapieren eingesetzt werden soll.

Bevorzugt wird das alkalisch reagierende Kontaktmittel in einer Menge von 0,4 bis 0,8 %, besonders bevorzugt 0,4 bis 0,5 %, bezogen auf die gesamte Reaktionsmischung, zugesetzt.

Formaldehyd wird in solcher Menge zugegeben, daß das Verhältnis von Phenol zu Formaldehyd im Bereich von 1:1,5 bis 1:4, bevorzugt 1:2 bis 1:2,5 liegt.

Der Ansatz, der Phenol, Aminoplastbildner, alkalisch reagierendes Kontaktmittel und Formaldehyd enthält, wird bis zum Sieden erhitzt und so lange auf dieser Temperatur gehalten, bis nicht mehr als 2%, bevorzugt weniger als 1 % freies Phenol in der Mischung nachweisbar sind. Bevorzugt wird Formaldehyd in Form einer wäßrigen Lösung von Formaldehyd allein, als para-Formaldehyd oder als Mischung einer wäßrigen Lösung mit para-Formaldehyd eingesetzt.

Wenn die Reaktion von Phenol, Aminoplastbildner und Formaldehyd beendet ist, wird die Mischung nach üblichen Verfahren, besonders bevorzugt durch Vakuumdestillation entwässert. Die Entwässerung wird bevorzugt so lange durchgeführt, bis ein Wassergehalt von 25 bis 2, vorzugsweise 10 bis 5%, bestimmt nach der Karl-Fischer-Methode, erreicht ist. Das Harz liegt dann in Form einer zäh-viskosen Masse vor. Diese zäh-viskose Masse wird anschließend in Methanol gelöst. Methanol wird dabei in solcher Menge eingesetzt, daß eine klare Lösung entsteht. Bevorzugt wird so viel Methanol zugesetzt, daß eine 50- bis 70%ige, besonders bevorzugt 55- bis 65%ige klare Lösung entsteht.

Während der Entwässerung wird bevorzugt die Temperatur der Mischung abgesenkt auf eine Temperatur im Bereich von 50 bis 70°C. Bei diesen Temperaturen liegt einerseits die Viskosität des Harzes in einem Bereich, der eine schnelle Entwässerung ermöglicht und andererseits ist ein unkontrollierter Anstieg der Viskosität und damit eine Beeinträchtigung der Eigenschaften des Endproduktes nicht gegeben.

Nach erfolgter Entwässerung und Zugabe von Methanol wird dann bei einem pH-Wert im Bereich von 7 bis 11, bevorzugt 8 bis 9, der Mischung ein Aminoplastbildner zugesetzt. Als Aminoplastbildner sind dieselben Substanzen geeignet, die in der ersten Stufe des Verfahrens verwendet werden können. Es können in beiden Stufen jeweils dieselben Aminoplastbildner verwendet werden. Bevorzugt wird in dieser Stufe als Aminoplastbildner Harnstoff oder Dicyandiamid verwendet. Die Reaktionsmischung wird nach Zugabe des Aminoplastbildners erhitzt und bei erhöhter Temperatur gehalten bis der Gehalt an freiem Formaldehyd auf unter 2 %, bevorzugt unter 1 % gesunken ist. Sobald die Reaktion so weit fortgeschritten ist, wird die Reaktion durch Abkühlen auf Raumtemperatur abgebrochen. Auf diese Weise wird eine Harzlösung erhalten, die nur noch sehr geringe Anteile an freiem Phenol und freiem Formaldehyd aufweist und in dieser Form zur Imprägnierung von Zellstoffmaterialien geeignet ist.

Die erfindungsgemäße Harzlösung kann aufgrund ihrer ho hen Verträglichkeit mit thermoplastischen und elastomeren Kunststofflösungen und ihrer geringen Emission zur Imprägnierung in vielen Bereichen verwendet werden, z.B. für Schleifmittel auf Unterlage, Appreturlösungen, dekorative Schichtstoffe usw.. Besonders geeignet ist sie zur Imprägnierung von Filterpapieren.

Ein weiterer Gegenstand der Erfindung ist daher die Verwendung der nach dem erfindungsgemäßen Verfahren hergestellten Imprägnierharzlösung zum Imprägnieren von Filterpapieren.

Mit dem erfindungsgemäßen Verfahren können Harze mit geringen freien Anteilen Phenol und Formaldehyd hergestellt werden, die eine hervorragende Verträglichkeit mit thermoplastischen Kunststofflösungen aufweisen. Dadurch ist den Verarbeitern die Möglichkeit gegeben, Filter mit genau abgestimmten Eigenschaften herzustellen. Die mit dem erfindungsgemäßen Harz imprägnierten Filterpapiere sind sehr gut für die verschiedensten Einsatzzwecke geeignet.

Die Erfindung wird durch die folgenden Beispiele erläutert:

Zur Beurteilung der Gebrauchseigenschaften von imprägnierten Filterpapieren sind die folgenden Testmethoden üblich. Zur Bestimmung der Festigkeitseigenschaften wird der Berstdruck nach 24 Stunden Lagerung bei 95°C und 25 % relativer Luftfeuchtigkeit bestimmt. Die Festigkeitswerte sollten dabei nicht abfallen, da sonst Verarbei-tungsprobleme bei der Formgebung entstehen. Der Verzunderungstest läßt Rückschlüsse auf den Abbau der mechanischen Festigkeitswerte durch längere Einwirkung von höheren Temperaturen zu. Durch den Wettingtest kann eine Beurteilung über das Verhalten des Filterpapiers bei Einwirkung von Wasser erfolgen. Diese Beurteilung ist z.B. wichtig, wenn das imprägnierte Papier in Baustellenfahrzeugen verwendet wird, bei denen die Luftfilter mit Wasser von angesaugten Staubteilchen freigespült werden müssen. Der Cobbtest ermöglicht die Charakterisierung der hydrophoben/hydrophilen Grenzflächeneigenschaften des gehärteten Filterpapiers. Cobb-Werte bis 30 mg/m$^2$ sind die Garantie dafür, daß selbst bei hoher Luftfeuchtigkeit ein Ausfall des Filters durch Durchfeuchtung vermieden wird. Die Menge des in der Reaktionsmischung enthaltenen Wassers kann als wesentlicher, die Kondensation beeinflussender Faktor angesehen werden. Mit zunehmendem Gehalt an Wasser in der Reaktionsmischung sinkt die Reaktionsgeschwindigkeit und der Anteil an Monomeren nimmt zu. Mit sinkendem Wassergehalt in der Reaktionsmischung wird eine untere Grenze an Restmonomeren nicht unterschritten. Der Anteil von hochmolekularen Harzkörpern nimmt zu. Ein zu hoher Anteil von hochmolekularen Harzanteilen verschlechtert wiederum die Filtrationseigenschaften der damit hergestellten Filter.

**Beispiel 1** (Vergleich)

5,00 kg Phenol (53,1 Mol), 3,855 kg Formaldehyd 40% (51,3 Mol), 0,770 kg p-Formaldehyd 94% (24,1 Mol) und 1,000 kg Diethylenglykol (9,4 Mol) werden in die Reaktionsapparatur eingefüllt.

Unter ständigem Rühren erfolgt der Zusatz von 0,200 kg Natronlauge 25% (1,25 Mol). Die Reaktionsmischung wird angeheizt. Mit beginnender Wärmetönung wird die Energiezufuhr reduziert. Durch Kühlung wird die exotherme Reaktion so gesteuert, daß nach ca. 15 Minuten der Siedepunkt der Reaktionsmischung erreicht ist.

Die Reaktion wird am Siedepunkt 120 Minuten weitergeführt. Nach der Reaktion werden unter Vakuum bei 65 ± 5°C 5,600 kg Wasser abdestilliert. Der verbleibenden klaren Harzlösung werden 7,500 kg Methanol zugesetzt. Die Lösung wird auf 20 bis 25°C abgekühlt.

Es werden 12,725 kg eines gelblich-braunen Harzes erhalten. Die Eigenschaften des Harzes sind in Tabelle 1 aufgelistet.

**Beispiel 2** (Vergleich)

5,00 kg Phenol (53,1 Mol), 6,660 kg Formaldehyd 40% (88,7 Mol) und 1,330 kg p-Formaldehyd 94% (41,6 Mol) werden in die Reaktionsapparatur eingefüllt.

Unter stetigem Rühren werden 0,500 kg einer 25%igen Natronlauge (3,13 Mol) zugesetzt.

Die Temperatur wird innerhalb von 60 Minuten auf 90°C gesteigert und 60 Minuten bei 90°C gehalten.

Nach der Reaktion werden 2,500 kg Wasser unter Vakuum bei 65 ± 5°C abdestilliert. Der verbleibenden Harzmasse werden 7,500 kg Methanol und 9,500 kg Polyvinylacetatlösung (30% in Methanol) zugesetzt. Das verwendete Polyvinylacetat hat ein Molgewicht von 40 bis 50.000.

Es werden 27,990 kg eines rotbraunen Harzes erhalten. Die Eigenschaften des Harzes sind Tabelle 1 zu entnehmen.

**Beispiel 3**

4,706 kg Phenol (50,0 Mol) werden in die Reaktionsapparatur eingefüllt und 19,418 g Amidoschwefelsäure (0,2 Mol) zugesetzt. Die Reaktionsmischung wird auf 60°C aufgeheizt.

Unter stetigem Rühren erfolgt der Zusatz von 0,300 kg Harnstoff (5,0 Mol). Die Temperatur wird auf 120 bis 130°C gesteigert. Bei dieser Temperatur verbleibt die Reaktionsmischung 30 Minuten.

Danach wird auf 80°C gekühlt und es werden 0,600 kg einer 10%igen Lithiumhydroxidlösung (2,5 Mol Lithiumhydroxid) und 8,500 kg Formaldehyd 40% (113,2 Mol) zugesetzt.

Die Reaktionsmischung wird zum Kochpunkt aufgeheizt und die Kondensation am Siedepunkt weitergeführt, bis der freie Phenolgehalt in der Reaktionsmischung auf <1% abgesunken ist.

Nach der Reaktion werden unter Vakuum bei 65±5°C 5,400 kg Wasser abdestilliert. Der verbleibenden klaren Harzmasse werden 3,700 kg Methanol zugesetzt.

Nach Zugabe von 0,901 kg Harnstoff (15,0 Mol) wird wiederum bis zum Sieden erhitzt und so lange reagiert, bis der freie Formaldehyd in der Harzlösung auf einen Wert von <1% abgesunken ist. An diesem Punkt wird die Reaktion durch schnelle Kühlung abgebrochen. Die Harzlösung wird auf eine Lagertemperatur von 20 bis 25°C abgekühlt.

Es werden 13,327 kg eines gelblich-braunen Harzes erhalten, dessen Eigenschaften in Tabelle 1 gezeigt sind.

**Beispiel 4**

4,706 kg Phenol (50,0 Mol) werden in die Reaktionsapparatur eingefüllt und 19,418 g Amidoschwefelsäure (0,2 Mol) zugesetzt. Die Reaktionsmischung wird auf 60°C aufgeheizt.

Unter stetigem Rühren erfolgt der Zusatz von 0,300 kg Harnstoff (5,0 Mol). Die Temperatur wird auf 120 bis 130°C gesteigert. Bei dieser Temperatur verbleibt die Reaktionsmischung 30 Minuten.

Danach wird auf 80°C gekühlt und es werden 0,600 kg einer 10%igen Lithiumhydroxidlösung (2,50 Mol Lithiumhydroxid) und 6,620 kg Formaldehyd 40 % (88,2 Mol) sowie 0,800 kg p-Formaldehyd 94 % (25,0 Mol) zugesetzt.

Die Reaktionsmischung wird zum Kochpunkt aufgeheizt und die Kondensation am Siedepunkt weitergeführt, bis der freie Phenolgehalt in der Reaktionsmischung auf <1% abgesunken ist.

Nach der Reaktion werden unter Vakuum bei 65±5°C 4,270 kg Wasser abdestilliert. Der verbleibenden klaren Harzmasse werden 3,700 kg Methanol zugesetzt.

Nach Zugabe von 0,901 kg Harnstoff (15,0 Mol) wird wiederum bis zum Sieden erhitzt und so lang reagiert, bis der freie Formaldehyd in der Harzlösung auf einen Wert von <1% abgesunken ist. An diesem Punkt wird die Reaktion durch schnelle Kühlung abgebrochen. Die Harzlösung wird auf eine Lagertemperatur von 20 bis 25°C abgekühlt.

Es werden 13,377 kg eines gelblich-braunen Harzes erhalten, dessen Eigenschaften Tabelle 1 zu entnehmen sind.

**Beispiel 5**

4,706 kg Phenol (50,0 Mol) werden in die Reaktionsapparatur eingefüllt und 19,418 g Amidoschwefelsäure (0,2 Mol) zugesetzt. Die Reaktionsmischung wird auf 60°C aufgeheizt.

Unter stetigem Rühren erfolgt der Zusatz von 0,300 kg Harnstoff (5,0 Mol). Die Temperatur wird auf 120 bis 130°C gesteigert. Bei dieser Temperatur verbleibt die Reaktionsmischung 30 Minuten.

Danach wird auf 80°C gekühlt und es werden 0,600 kg einer 10%igen Lithiumhydroxidlösung (2,5 Mol Lithiumhydroxid) und 8,500 kg Formaldehyd 40 % (113,2 Mol) zugesetzt.

Die Reaktionsmischung wird zum Kochpunkt aufgeheizt und die Kondensation am Siedepunkt weitergeführt, bis der freie Phenolgehalt in der Reaktionsmischung auf <1% abgesunken ist.

Nach der Reaktion werden unter Vakuum bei 65±5°C 5,400 kg Wasser abdestilliert. Der verbleibenden klaren Harzmasse werden 3,700 kg Methanol zugesetzt.

Nach Zugabe von 1,261 kg Melamin (10,0 Mol) wird wiederum bis zum Sieden erhitzt und so lange reagiert, bis der freie Formaldehyd in der Harzlösung auf einen Wert von <1% abgesunken ist. An diesem Punkt wird die Reaktion durch schnelle Kühlung abgebrochen.

Die Harzlösung wird auf eine Lagertemperatur von 20 bis 25°C abgekühlt.

Es werden 13,688 kg eines gelblich-braunen Harzes erhalten. Die Eigenschaften des Harzes zeigt Tabelle 1.

EP 0 461 555 B1

**Beispiel 6**

4,706 kg Phenol (50,0 Mol) werden in die Reaktionsapparatur eingefüllt und 19,418 g Amidoschwefelsäure (0,2 Mol) zugesetzt. Die Reaktionsmischung wird auf 60°C aufgeheizt.

Unter stetigem Rühren erfolgt der Zusatz von 0,300 kg Harnstoff (5,0 Mol). Die Temperatur wird auf 120 bis 130°C gesteigert. Bei dieser Temperatur verbleibt die Reaktionsmischung 60 Minuten.

Danach wird auf 80°C gekühlt und es werden 0,600 kg einer 10%igen Lithiumhydroxidlösung (2,5 Mol Lithiumhydroxid) und 8,500 kg Formaldehyd 40% (113,2 Mol) zugesetzt.

Die Reaktionsmischung wird zum Kochpunkt aufgeheizt und die Kondensation am Siedepunkt weitergeführt, bis der freie Phenolgehalt in der Reaktionsmischung auf <1% abgesunken ist.

Nach der Reaktion werden unter Vakuum bei 65±5°C 5,400 kg Wasser abdestilliert. Der verbleibenden klaren Harzmasse werden 3,700 kg Methanol zugesetzt.

Nach Zugabe von 0,901 kg Harnstoff (15,0 Mol) wird wiederum bis zum Sieden erhitzt und so lange reagiert, bis der freie Formaldehyd in der Harzlösung auf einen Wert von <1% abgesunken ist. An diesem Punkt wird die Reaktion durch schnelle Kühlung abgebrochen. Die Harzlösung wird auf eine Lagertemperatur von 20 bis 25°C abgekühlt.

Es werden 13,327 kg eines gelblich-braunen Harzes erhalten. Die Eigenschaften des Harzes sind in Tabelle 1 dargestellt.

**Beispiel 7**

4,706 kg Phenol (50,0 Mol) werden in die Reaktionsapparatur eingefüllt und 19,418 g Amidoschwefelsäure (0,2 Mol) zugesetzt. Die Reaktionsmischung wird auf 60°C aufgeheizt.

Unter stetigem Rühren erfolgt der Zusatz von 0,901 kg Harnstoff (15,0 Mol). Die Temperatur wird auf 120 bis 130°C gesteigert. Bei dieser Temperatur verbleibt die Reaktionsmischung 60 Minuten.

Danach wird auf 80°C gekühlt und es werden 0,600 kg einer 10%igen Lithiumhydroxidlösung (2,5 Mol Lithiumhydroxid) und 8,500 kg Formaldehyd 40% (113,2 Mol) zugesetzt.

Die Reaktionsmischung wird zum Kochpunkt aufgeheizt und die Kondensation am Siedepunkt weitergeführt, bis der freie Phenolgehalt in der Reaktionsmischung auf <1% abgesunken ist.

Nach der Reaktion werden unter Vakuum bei 65±5°C 5,400 kg Wasser abdestilliert. Der verbleibenden klaren Harzmasse werden 4,100 kg Methanol zugesetzt.

Nach Zugabe von 0,901 kg Harnstoff (15,0 Mol) wird wiederum bis zum Sieden erhitzt und so lange reagiert, bis der freie Formaldehyd in der Harzlösung auf einen Wert von <1% abgesunken ist. An diesem Punkt wird die Reaktion durch schnelle Kühlung abgebrochen. Die Harzlösung wird auf eine Lagertemperatur von 20 bis 25°C abgekühlt.

Es werden 14,327 kg eines gelblich-braunen Harzes erhalten. Die Eigenschaften des Harzes zeigt Tabelle 1.

**Beispiel 8**

4,706 kg Phenol (50,0 Mol) werden in die Reaktionsapparatur eingefüllt und 19,418 g Amidoschwefelsäure (0,2 Mol) zugesetzt. Die Reaktionsmischung wird auf 60°C aufgeheizt.

Unter stetigem Rühren erfolgt der Zusatz von 0,300 kg Harnstoff (5,0 Mol). Die Temperatur wird auf 120 bis 130°C gesteigert. Bei dieser Temperatur verbleibt die Reaktionsmischung 30 Minuten.

Danach wird auf 80°C gekühlt und es werden 0,600 kg einer 10%igen Lithiumhydroxidlösung (2,5 Mol Lithiumhydroxid), 5,100 kg Destillationsabwasser aus der PF-Produktion und 3,400 kg p-Formaldehyd 94 % (106,4 Mol) zugesetzt.

Die Reaktionsmischung wird zum Kochpunkt aufgeheizt und die Kondensation am Siedepunkt weitergeführt, bis der freie Phenolgehalt in der Reaktionsmischung auf <1% abgesunken ist.

Nach der Reaktion werden unter Vakuum bei 65±5°C 5,400 kg Wasser abdestilliert. Der verbleibenden klaren Harzmasse werden 3,700 kg Methanol zugesetzt.

Nach Zugabe von 0,901 kg Harnstoff (15,0 Mol) wird wiederum bis zum Sieden erhitzt und so lange reagiert, bis der freie Formaldehyd in der Harzlösung auf einen Wert von <1% abgesunken ist. An diesem Punkt wird die Reaktion durch schnelle Kühlung abgebrochen. Die Harzlösung wird auf eine Lagertemperatur von 20 bis 25°C abgekühlt.

Es werden 13,327 kg eines gelblich-braunen Harzes erhalten, dessen Eigenschaften Tabelle 1 zu entnehmen sind.

7

Tabelle 1

| Eigenschaften | nicht erfindungsgemäß | | | | erfindungsgemäß | | | |
|---|---|---|---|---|---|---|---|---|
| | Beispiel 1 | Beispiel 2 | Beispiel 3 | Beispiel 4 | Beispiel 5 | Beispiel 6 | Beispiel 7 | Beispiel 8 |
| nicht flüchtige Anteile bei 135°C DIN 16916 -02-H1 | 59,8% | 34,3% | 60,2% | 60,2% | 60,5% | 60,0% | 60,4% | 60,4% |
| Löslichkeit in Methanol | 1:10+ | 1:1,4 | 1:10+ | 1:10+ | 1:2,4 | 1:10+ | 1:8 | 1:10+ |
| pH-Wert | 7,7 | 6,6 | 8,0 | 8,1 | 8,2 | 8,0 | 8,1 | 8,1 |
| Wassergehalt DIN 51777 Teil | 2,7% | 10,5% | 4,9% | 4,8% | 4,5% | 4,8% | 4,5% | 4,5% |
| B-Zeit bei 150°C DIN 16916 -02-C2 | 0'43" | 0'40" | 0'58" | 0'55" | 1'10" | 0'55" | 1'05" | 1'05" |
| Viskosität DIN 53015 | 462 mPa s | 1690 mPa s | 323 mPa s | 383 mPa s | 420 mPa s | 320 mPa s | 390 mPa s | 342 mPa s |
| freies Phenol DIN 16916 -02-C2 gaschromatographisch | 5,8% | 0,4% | 0,91% | 0,95% | 0,8% | 0,9% | 0,8% | 0,98% |
| freier Formaldehyd DIN | | | | | | | | |

| | 16746 – A Sulfit-Verfahren | | | | | | | |
|---|---|---|---|---|---|---|---|---|
| | 1,4% | 1,05% | 1,1% | 1,0% | 0,6% | 1,2% | 0,8% | 1,0% |
| Polymerverträglichkeit | 0 | – | 200+ | 200+ | 80 | 200+ | 150 | 200+ |

EP 0 461 555 B1

## Bestimmungsmethode der Polymerverträglichkeit

Als Testsubstanz für die Verträglichkeit der Harze mit thermoplastischen Kunststoffen wurde eine 30%ige methanolische Lösung von Polyvinylacetat mit einem Molgewicht von 50 bis 60.000 festgelegt.

Die Verträglichkeit mit Polymeren wird nach folgender Arbeitsweise bestimmt: 50 g Harz, 50 g Methanol und 12,5 g Wasser werden miteinander vermischt (Magnetrührer, Becherglas hohe Form 600 ml, Bestimmungstemperatur 20°C) und 10 g Polymerlösung zugesetzt. Die Lösung wird mit Methanol verdünnt, bis eine bleibende Trübung auftritt.

EP 0 461 555 B1

Tabelle 2

| Imprägnate Berstdruck DIN 53758 | nicht erfindungsgemäß | | | | erfindungsgemäß | | | |
|---|---|---|---|---|---|---|---|---|
| | Beispiel 1 | Beispiel 2 | Beispiel 3 | Beispiel 4 | Beispiel 5 | Beispiel 6 | Beispiel 7 | Beispiel 8 |
| - nach der Imprägnie- rung | 1,6-1,8 | 2,0-2,2 | 2,0-2,2 | 2,0-2,2 | 1,9-2,1 | 2,0-2,2 | 1,8-2,0 | 2,0-2,2 |
| - nach 24 Stunden La- gerung Raumklima | 1,6-1,8 | 1,6-1,8 | 1,8-2,1 | 1,8-2,1 | 1,7-1,9 | 1,8-2,2 | 1,4-1,6 | 1,8-2,1 |
| - nach 24 Stunden Lagerung - 95% rel.L. | 1,0-1,2 | 1,3-1,5 | 1,5-1,8 | 1,5-1,8 | 1,3-1,5 | 1,5-1,9 | 1,2-1,4 | 1,6-1,9 |
| - nach 24 Stunden Lagerung - 25 % rel. L. | 1,1-1,2 | 0,9-1,2 | 1,0-1,2 | 1,0-1,3 | 0,9-1,1 | 1,0-1,1 | 0,8-1,0 | 1,1-1,4 |
| - Härtung 10 min - 160°C | 1,8-2,0 | 2,0-2,2 | 1,8-2,0 | 1,8-2,0 | 1,6-1,8 | 1,8-2,0 | 1,4-1,6 | 1,9-2,1 |
| - Härtung 10 min - 160°C Lagerung 24 Stunden 95% rel. L. | 2,6-2,8 | 2,8-3,0 | 2,5-2,8 | 2,6-2,8 | 2,2-2,4 | 2,2-2,4 | 2,6-2,8 | 2,5-2,8 |

|  | 68% | 82% | 84% | 82% | 90% | 83% | 72% | 85% |
|---|---|---|---|---|---|---|---|---|
| – Wetting Test<br>Härtung 10 min – 160°C<br>Lagerung 10 min – Wasser<br>Wert in % bezogen auf<br>den Ausgangswert |  |  |  |  |  |  |  |  |
| – Verzunderung<br>nach 24 Std.<br>bei 160°C | 0,5–0,7 | 0,6–0,9 | 1,0–1,2 | 1,0–1,2 | 0,9–1,1 | 1,0–1,2 | 0,8–1,0 | 1,0–1,2 |
| – Cobb Test<br>DIN 53132 | 40–60 | 20–30 | 20–30 | 20–30 | 10–20 | 20–30 | 40–50 | 15–30 |
| – Eisenchlo-<br>ridtest | negativ | negativ | negativ | negativ | negativ | negativ | negativ | negativ |
| – Verkle-<br>bungstest | negativ | negativ | negativ | negativ | negativ | negativ | negativ | negativ |
| – Farbe nach<br>10 min<br>60°C | gelblich-<br>braun | rotbraun | gelblich-<br>braun | gelblich-<br>braun | gelblich-<br>braun | gelblich-<br>braun | gelblich-<br>braun | gelblich-<br>braun |

Die Resultate zeigen, daß Resolharze hergestellt nach Vergleichsbeispiel 1 zu hohe freie Anteile Phenol und Formaldehyd aufweisen und daher zur Imprägnierung von Filterpapieren wenig geeignet sind. Die Viskosität der Harze liegt über dem Grenzbereich von 400 mPa s (bei 60% Harzgehalt).

Durch die Erhöhung des molaren Verhältnisses Phenol zu Formaldehyd von 1:1,42 auf 1:2,00 wird bei sonst gleichen Verfahrensparametern des Vergleichsbeispieles 1 ein Harz erhalten, das bei 60% Harzgehalt 3,8% (5,8%) Phenol und 2,4% (1,4%) freien Formaldehyd und eine Viskosität von 1140 mPa s aufweist. Die geforderten Sollwerte werden weit überschritten. In Klammern sind die Werte angegeben für den Ansatzes nach Vergleichsbeispiel 1 (Molverhältnis 1: 1,42).

Harze, hergestellt nach Vergleichsbeispiel 1, ergeben nach der Imprägnierung und Härtung Filterpapiere mit einer bräunlichen Färbung. Auffallend ist der starke Abfall der Festigkeitseigenschaften nach der Wärmelagerung (Verzunderungstest) und der Lagerung in Wasser (Wettingtest).

Die Harze sind mit thermoplastischen Kunststofflösungen nicht verträglich.

Mit dem Verfahren gemäß Vergleichsbeispiel 2 entstehen Harze, die eine extrem hohe Viskosität und eine geringe Löslichkeit in Methanol aufweisen. Als untere Grenze für die Löslichkeit muß eine Verdünnung von 1 Teil Harz mit 6 Teilen Methanol gegeben sein.

Die Kontaktmittelmenge und das Molverhältnis Phenol zu Formaldehyd von 1:2,45 sowie die Verfahrensbedingungen führen zu Resolharzen, die in Hinsicht auf den Gehalt an freien Phenolen den Anforderungen entsprechen, jedoch einen zu hohen freien Formaldehydgehalt aufweisen.

Um zu vergleichbaren Ergebnissen zu kommen, wurde die auf einen Harzanteil von 34,3 % entfallende Menge von freiem Formaldehyd auf einen Harzgehalt von 60% umgerechnet (entspricht 1,84 % Formaldehyd).

Die notwendige Konzentration der Imprägnierlösung von 8 bis 12% kann nur erreicht werden, wenn zur Verdünnung anteilweise Aceton mitverwendet wird. Damit verschärfen sich die Probleme mit dem Ex-Schutz der Anlagen und der Rückgewinnung von Lösungsmitteln.

Harze nach Vergleichsbeispiel 2 ergeben nach der Imprägnierung und Härtung Filterpapiere mit unerwünschter intensiv rot-brauner Färbung.

Harze nach den erfindungsgemäßen Beispielen 3,4,6,7, und 8 erfüllen die technischen Anforderungen, die an Harze zur Imprägnierung für Filterpapiere gestellt werden.

**Patentansprüche**

1.  Verfahren zur Herstellung von Imprägnierharzen auf Phenolformaldehyd-Basis, **dadurch gekennzeichnet,** daß man

    (a) Phenol und einen Aminoplast-Bildner bei saurem pH-Wert erhitzt,

    (b) alkalisch reagierendes Kontaktmittel und Formaldehyd in solcher Menge zugibt, daß das Verhältnis von Phenol zu Formaldehyd im Bereich von 1 : 1,5 bis 1 : 4 liegt,

    (c) die Mischung so lange bis zum Sieden erhitzt, bis nicht mehr als 2 % freies Phenol nachweisbar ist,

    (d) die erhaltene Mischung entwässert,

    (e) das erhaltene Harz in Methanol löst,

    (f) einen Aminoplast-Bildner zusetzt und so lange reagieren läßt, bis nicht mehr als 2 % freier Formaldehyd nachweisbar ist und

    (g) die Reaktion durch schnelles Abkühlen auf Raumtemperatur beendet.

2.  Verfahren nach Anspruch 1, **dadurch gekennzeichnet,** daß man in Stufe (a) Phenol und Aminoplast-Bildner in einem molaren Verhältnis von 1 : 0,05 bis 1 : 0,3 verwendet.

3.  Verfahren nach Anspruch 1 oder 2, **dadurch gekennzeichnet,** daß man als Aminoplast-Bildner Harnstoff, Dicyandiamid, Melamin und seine Derivate, substituierte Guanamine und/oder Sulfonamide einsetzt.

4.  Verfahren nach Anspruch 3, **dadurch gekennzeichnet,** daß man in Stufe (a) als Aminoplast-Bildner Harnstoff und/oder Dicyandiamid verwendet.

5.  Verfahren nach einem der vorhergehenden Ansprüche, **dadurch gekennzeichnet,** daß man den pH-Wert in Stufe (a) mit Amidosulfonsäure, Glyoxylsäure, Maleinsäureanhydrid oder Oxalsäure einstellt.

6.  Verfahren nach einem der vorhergehenden Ansprüche, **dadurch gekennzeichnet,** daß man als alkalisch reagierendes Kontaktmittel Alkali- oder Erdalkalihydroxide, deren katalytisch wirkende Salze mit schwachen Säuren, Ammoniak oder Amine verwendet.

7.  Verfahren nach Anspruch 6, **dadurch gekennzeichnet,** daß man als alkalisches Kontaktmittel Lithiumhydroxid verwendet.

8. Verfahren nach einem der vorhergehenden Ansprüche, **dadurch gekennzeichnet,** daß man das alkalisch reagierende Kontaktmittel in einer Menge von 0,4 bis 0,8 %, bezogen auf die gesamte Reaktionsmischung, zugibt.

9. Verfahren nach einem der vorhergehenden Ansprüche, **dadurch gekennzeichnet,** daß man Formaldehyd in solcher Menge zugibt, daß das molare Verhältnis von Phenol zu Formaldehyd im Bereich von 1:2,1 bis 1:2,4 liegt.

10. Verfahren nach einem der vorhergehenden Ansprüche, **dadurch gekennzeichnet,** daß Formaldehyd in Form einer wäßrigen Lösung und/oder als para-Formaldehyd verwendet wird.

11. Verfahren nach einem der vorhergehenden Ansprüche, **dadurch gekennzeichnet,** daß man die Mischung durch Vakuumdestillation entwässert.

12. Verfahren nach einem der vorhergehenden Ansprüche, **dadurch gekennzeichnet,** daß man die Mischung bis auf einen Wassergehalt von 2 bis 25 %, nachgewiesen nach der Karl-Fischer-Methode, entwässert.

13. Verfahren nach einem der vorhergehenden Ansprüche, **dadurch gekennzeichnet,** daß man in Stufe (e) in dem in Methanol gelösten Harz einen pH im Bereich von 9 bis 10 einstellt.

14. Verfahren nach einem der vorhergehenden Ansprüche, **dadurch gekennzeichnet,** daß man die Reaktion in Stufe (f) so lange durchführt, bis nicht mehr als 1 % freier Formaldehyd nachweisbar ist.

15. Verwendung der nach einem Verfahren gemäß einem der vorhergehenden Ansprüche 1 bis 14 hergestellten Imprägnierharze zur Imprägnierung von Filterpapieren.

**Claims**

1. A process for the preparation of impregnating resins based on phenol formaldehyde, characterised in that
(a) phenol and an aminoplastic component with an acid pH value are heated,
(b) alkaline-reacting contact agent and formaldehyde are added in a quantity such that the ratio of phenol to formaldehyde is in a range of from 1 : 1.5 to 1 : 4,
(c) the mixture is heated to boiling until no more than 2 % free phenol can be detected,
(d) the resultant mixture is dehydrated,
(e) the resultant resin is dissolved in methanol,
(f) an aminoplastic component is added and is allowed to react until no more than 2 % free formaldehyde can be detected; and
(g) the reaction is terminated by rapid cooling to room temperature.

2. A process according to Claim 1, characterised in that in stage (a) phenol and the aminoplastic component are used in a molar ratio of from 1 : 0.05 to 1 : 0.3.

3. A process according to Claim 1 or 2, characterised in that urea, dicyandiamide, melamine and its derivatives, substituted guanamines and/or sulphonamides are used as the aminoplastic component.

4. A process according to Claim 3, characterised in that urea and/or dicyandiamide is/are used as the aminoplastic component in stage (a).

5. A process according to any one of the preceding Claims, characterised in that the pH value in stage (a) is adjusted with amidosulphuric acid, glyoxylic acid, maleic acid anhydride or oxalic acid.

6. A process according to any one of the preceding Claims, characterised in that alkaline or alkaline earth hydroxides, their catalytically acting salts with weak acids, ammonia or amines are used as the alkaline-reacting contact agent.

7. A process according to Claim 6, characterised in that lithium hydroxide is used as the alkaline contact agent.

8. A process according to any one of the preceding Claims, characterised in that the alkaline-reacting contact agent is added in a quantity of from 0.4 to 0.8 %, in relation to the entire reaction mixture.

9. A process according to any one of the preceding Claims, characterised in that formaldehyde is added in a quantity such that the molar ratio of phenol to formaldehyde is in a range of from 1:2.1 to 1:2.4.

10. A process according to any one of the preceding Claims, characterised in that formaldehyde is used in the form of an aqueous solution and/or as para-formaldehyde.

11. A process according to any one of the preceding Claims, characterised in that the mixture is dehydrated by vacuum distillation.

12. A process according to any one of the preceding Claims, characterised in that the mixture is dehydrated to a water content of from 2 to 25 %, detected in accordance with the Karl-Fischer method.

13. A process according to any one of the preceding Claims, characterised in that in stage (e) a pH value in a range of from 9 to 10 is adjusted in the resin dissolved in methanol.

14. A process according to any one of the preceding Claims, characterised in that the reaction in stage (f) is carried out until no more than 1 % free formaldehyde can be detected.

15. Use of the impregnating resins in accordance with a process according to any one of the preceding Claims 1 to 14 for impregnating filter papers.

**Revendications**

1. Procédé de préparation de résines d'imprégnation à base de phénol-formaldéhyde, caractérisé en ce que
   a) l'on chauffe du phénol et un formateur d'aminoplaste à une valeur de pH acide ;
   b) ajoute un catalyseur à réaction alcaline et du formaldéhyde en une quantité telle que le rapport de phénol à formaldéhyde se situe dans la plage de 1:1,5 à 1:4,
   c) maintient le mélange à ébullition jusqu'à ce qu'on ne puisse plus déceler plus de 2% de phénol libre,
   d) déshydrate le mélange obtenu,
   e) dissout la résine résultante dans le méthanol,
   f) ajoute un formateur d'aminoplaste et laisse réagir jusqu'à ce qu'on ne puisse plus déceler plus de 2% de formaldéhyde libre et
   g) termine la réaction en refroidissant rapidement jusqu'à la température ambiante.

2. Procédé selon la revendication 1, caractérisé en ce que, dans l'étape a), on utilise le phénol et le formateur d'aminoplaste dans un rapport molaire de 1:0,05 à 1:0,3.

3. Procédé selon la revendication 1 ou 2, caractérisé en ce qu'on met en oeuvre de l'urée, du dicyanodiamide, de la mélamine et ses dérivés, des guanamines substituées et/ou des sulfonamides en tant que formateur d'aminoplaste.

4. Procédé selon la revendication 3, caractérisé en ce que, dans l'étape a), on utilise de l'urée et/ou du dicyanodiamide en tant que formateur d'aminoplaste.

5. Procédé selon l'une des revendications précédentes, caractérisé en ce qu'on ajuste la valeur de pH dans l'étape a) avec de l'acide amidosulfonique, de l'acide glyoxalique, de l'anhydride maléique ou de l'acide oxalique.

6. Procédé selon l'une des revendications précédentes, caractérisé en ce qu'on utilise comme catalyseur à réaction alcaline des hydroxydes alcalins ou alcalino-terreux, leurs sels à effet catalytique avec des acides faibles, de l'ammoniaque ou des amines.

7. Procédé selon la revendication 6, caractérisé en ce qu'on emploie de l'hydroxyde de lithium comme catalyseur alcalin.

8. Procédé selon l'une des revendications précédentes, caractérisé en ce qu'on ajoute le catalyseur à réaction alcaline en une quantité de 0,4 à 0,8% par rapport au mélange réactionnel total.

9. Procédé selon l'une des revendications précédentes, caractérisé en ce qu'on ajoute le formaldéhyde en une quantité telle que le rapport molaire de phénol à formaldéhyde se situe dans la plage de 1:2,1 à 1:2,4.

10. Procédé selon l'une des revendications précédentes, caractérisé en ce que le formaldéhyde est utilisé sous la forme d'une solution aqueuse et/ou sous forme de paraformaldéhyde.

11. Procédé selon l'une des revendications précédentes, caractérisé en ce qu'on déshydrate le mélange par distillation sous vide.

12. Procédé selon l'une des revendications précédentes, caractérisé en ce qu'on déshydrate le mélange jusqu'à une teneur en eau de 2 à 25%, décelée par la méthode Karl-Fischer.

13. Procédé selon l'une des revendications précédentes, caractérisé en ce que, dans l'étape e), on ajuste dans la résine dissoute dans le méthanol un pH dans la plage de 9 à 10.

14. Procédé selon l'une des revendications précédentes, caractérisé en ce qu'on poursuit la réaction dans l'étape (f) jusqu'à ce qu'on ne puisse plus déceler plus de 1% de formaldéhyde libre.

15. Utilisation des résines d'imprégnation préparées selon un procédé conforme à l'une des revendications 1 à 14 précédentes pour l'imprégnation de papiers-filtres.